Europäisches Patentamt

(19) European Patent Office

Office européen des brevets

(11) Publication number: **0 070 059**
**B1**

(12) **EUROPEAN PATENT SPECIFICATION**

(45) Date of publication of patent specification: **29.01.86**

(21) Application number: **82200800.9**

(22) Date of filing: **29.06.82**

(51) Int. Cl.⁴: **B 01 D 13/00**

(54) **Method and apparatus for concentrating solutions by means of reverse osmosis.**

(30) Priority: **10.07.81 NL 8103299**

(43) Date of publication of application:
**19.01.83 Bulletin 83/03**

(45) Publication of the grant of the patent:
**29.01.86 Bulletin 86/05**

(84) Designated Contracting States:
**AT BE CH DE FR GB IT LI LU NL SE**

(56) References cited:
**EP-A-0 029 600**
**GB-A-2 053 024**
**US-A-3 617 550**
**US-A-3 836 457**
**US-D- 524 806**

**PATENTS ABSTRACTS OF JAPAN, vol. 3, no. 147, 5th December 1979, page 55 C 66;**

(73) Proprietor: **NEDERLANDSE CENTRALE ORGANISATIE VOOR TOEGEPAST-NATUURWETENSCHAPPELIJK ONDERZOEK**
**Juliana van Stolberglaan 148**
**NL-2595 CL The Hague (NL)**

(72) Inventor: **van Wijk, Hendrik Frederik**
**Anna van Burenlaan 7A**
**Zeist (NL)**

(74) Representative: **Plaisier, Aart et al**
**Nederlandsch Octrooibureau Johan de Wittlaan 15 P.O. Box 29720**
**NL-2502 LS 's-Gravenhage (NL)**

Courier Press, Leamington Spa, England.

# Description

The invention relates to a method and apparatus for concentrating solutions by means of reverse osmosis.

While concentrating solutions by means of reverse osmosis a limit value for concentrating is reached at increasing concentration of the dissolved material, because the osmotic pressure of the solution increases to such a level, that it approaches the applied pressure. Prior to reaching this point, the transportation gets so low, that it is no longer acceptable for practical purposes. The selective transportation of solvent through the membrane is the cause that the concentration of the dissolved material at the membrane surface is higher than in the remaining body of the solution. This concentration-polarisation can be reduced by intensive stirring at the pressure side of the membrane surface, for example with a circulation pump. However the osmotic pressure of a solution remains the limiting factor when concentrating by means of a membrane for reverse osmosis. It will be understood that the applied pressure can not be increased unlimited, with a view to the limitations imposed by the strength of the material of the membrane and the supporting layers therefore. Though according to theoretical considerations it is desirable to make the difference in concentration over the membrane small, for example by allowing a certain concentration of the material to be concentrated in solution at the permeate side, in practice this appears to provide unsurmountable problems, in particular as it is not possible to stir at the permeate side because of the supporting layers present there. This keeps the production limited as well.

The disadvantage of the counteracting osmotic pressure can be mitigated somewhat by using a membrane with a limited retaining capacity R (retention), such as described in British Patent Specification No. 1,324,031. The latter method shows a substantial effect with respect to the osmotic pressure only when higher permeate concentrations are allowed.

The feed concentration should not be lower than the permeate concentration, from a viewpoint of process efficiency, as otherwise a concentration previously obtained will in part be nullified.

The method according to British Patent Specification No. 1,324,031 thus comprises that the permeate flow of the membrane with limited retention should have a concentration amounting to $(1-R)\times$ the concentration of the concentrate. Concentrating by a factor of for example 10 implies that the retention of the membrane should amount to 0.9; this will provide only a small advantage with respect to the osmotic pressure.

The invention provides a method and apparatus by which the above disadvantages can be mitigated or even avoided.

More in particular the invention relates to a method for concentrating solutions by means of reverse osmosis, wherein at least one membrane module (A) with a high retention for the compound to be concentrated is coupled with at least one membrane module (B) with a limited retention for the compound to be concentrated, the permeate from the (last) membrane module (B) being returned to the (first) membrane module (A), the solvent at the permeate side of the (first) membrane module (A) being removed and the concentrate of the compound to be concentrated being removed at the pressure side of the (first) membrane module (B), while the pressure sides of the (last) membrane module (A) and the (last) membrane module (B) are interconnected, and fresh solution to be treated is supplied at a point in the connection between the permeate side of the (last) membrane module (B) and the pressure side of the (first) membrane module (A,) characterised in that

(a) the total number of membrane modules is at least three and up to sixteen, with no more than eight modules, linked in counter-current, per each retention class (A or B); and

(b) the retention of the limited retention membrane modules (B) corresponds to a separation factor in the range of $1<\alpha<4$.

The separation factor is defined as follows:

$$\alpha = \frac{1-x_p}{x_p} \cdot \frac{x_r}{1-x_r},$$

wherein $x_p$ is the molar fraction of the dissolved compound in the permeate and $x_r$ is the molar fraction of the dissolved compound at the high pressure side of the membrane. In this description such membranes will further be referred to as α-membranes. It has now been found to be possible to obtain a continuous process by a suitable combination of at least one membrane with a high separation factor (herein further referred to as RO-membrane) with at least one α-membrane, wherein at least two membranes of at least one of the two types should be present, the properties of the two types of membranes being used to obtain on the one hand substantially pure solvent and on the other hand a concentrated solution as product stream, as will be elucidated in more detail hereinbelow.

For obtaining an optimal result it is of importance that the fresh solution to be treated is supplied at a point upstream of a pump positioned in a connection between the permeate side of the (last) membrane module (B) and the pressure side of the (first) membrane module (A). By a suitable selection of the number of modules (A) and (B) in relation to the α-membrane, on coupling of the modules (A) and (B) a concentration can be obtained which is substantially equal to that of the feed-solution to be treated. Depending on the type of the dissolved compound, the solvent used and the retention of the α-membrane, it may be advantageous to use instead of one membrane module (B) a cascade of such modules, and the arrangement of such a cascade can be one of the many options known for cascades, the selection of the arrangement being governed by the factors mentioned above as well as the yield envisaged. Cascades of two to eight membrane modules (B) are usually sufficient for the target envisaged, and a necessity when only one membrane module (A) is used. In most cases two to four membrane modules (B) will lead to the target envisaged. If desired one or more membrane modules (B) can be replaced by a continuous membrane column, such as the one described for gas separations in A. I. Ch. E. Journal, *26*, 558—566. A continuous membrane column in this context is considered to be equivalent to a plurality of membrane modules.

With respect to the membrane modules (A) the same considerations apply as discussed hereinabove with respect to membrane modules (B), implying that there can be cascade of two to eight of such membrane modules (A), one or more of which may have been replaced by a continuous membrane column as mentioned above. Again such a cascade is a necessity when only one membrane module (B) is used. The use of a cascade or a continuous membrane column provides the additional advantage that a favourable concentration gradient is present along the membrane, making the drop in concentration over the membrane smaller on average.

When using such a cascade or such a continuous membrane column as membrane module (B), the separation factor in the direction of the product flow decreases, preferably from about 4 to 1.1, while in practice a somewhat higher/lower limit than 1.1 is usually maintained, as at this latter value the separating potential is particularly small.

The membranes used in the osmosis have usually been made from the materials customary for that purpose, such as for example cellulose acetate, polysulphones or polyamides. Membranes with a limited retention are obtained by moderate curing.

In the manner described above it is possible to avoid the limitations of RO-membranes, caused by the osmotic pressure, either completely or at least partially. It has also appeared that the production of concentrate per m²/hour may be up to 80% higher under favourable conditions than can be obtained with an RO-cell in the range where the osmotic pressure not yet prevents further concentration with an RO-cell.

Determinative for the retention properties of a membrane is the after-treatment. That may comprise for example a temperature-treatment, a pressure-treatment, solvent shrinkage. Of importance is in that context that the retention properties are homogeneously divided over the surface of the membrane and are not caused or affected by local leakages. It is also possible to manufacture asymmetric membranes, wherein the retention properties of the membrane may be modified in the desired way by changes in the composition of the moulding syrup. By using membranes each having a different separation factor in a cascade, a supplemental possibility is created for highly concentrating solutions.

The invention also relates to an apparatus for concentrating a solution by means of the reverse osmosis method according to the invention, comprising at least one membrane module (A) with a high retention for the compound to be concentrated, coupled with at least one membrane module (B) with limited retention for the compound to be concentrated, in which the permeate side of the (last) membrane module B is connected to the pressure side of the (first) membrane module (A) by a conduit, and the pressure side of the (last) membrane module (A) is connected to the pressure side of the (last) membrane module (B) by a conduit, the (first) membrane module (A) at the permeate side being provided with an outlet conduit for solvent, the (first) membrane module (B) at the pressure side being provided with an outlet conduit for formed concentrate, a pump being present in the connecting conduit between the (last) membrane module (B) and the (first) membrane module (A) and at a point between this (last) membrane module (B) and the pump a supply conduit emerging into said connecting conduit characterised in that

(a) the total number of membrane modules is at least three and up to sixteen, with no more than eight modules, linked in counter-current, per each retention class (A or B); and

(b) the retention of the limited retention membrane modules (B) corresponds to a separation factor in the range of $1 < \alpha < 4$.

In a preferred embodiment the apparatus of the invention may comprise a cascade of membrane modules (B), more in particular two to eight, while the apparatus if desired may contain a cascade of membrane modules (A), more in particular two to eight. It is also favourable to replace at least one membrane module (A) and/or at least one membrane module (B) by a continuous membrane column. If the apparatus comprises a cascade of membrane modules or a continuous membrane column as membrane module (B), these are preferably selected in such a way that the separation factor of the membranes used, or along the continuous membrane column in the direction of the product flow, decreases from 4 to 1.1.

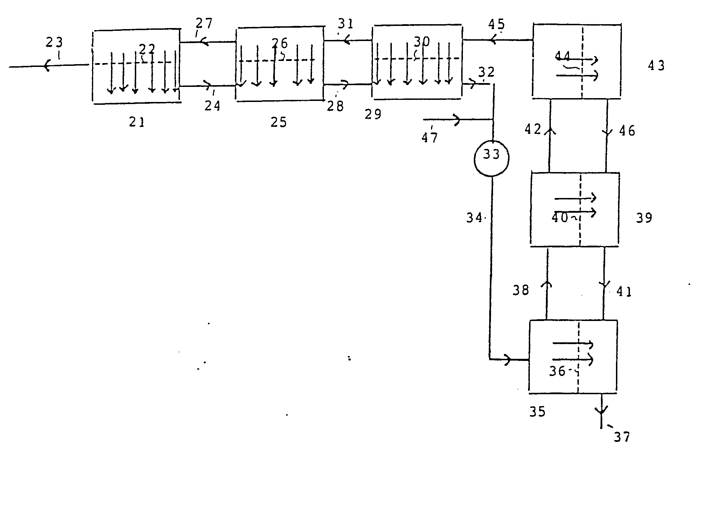

The method and apparatus according to the invention will be elucidated hereinafter with reference to the accompanying drawing, which is a schematic flow diagram of a presently preferred apparatus for concentrating solutions by means of reverse osmosis, comprising a cascade of membrane modules (B), coupled with a cascade of membrane modules (A).

The drawing shows a cascade coupling, wherein a first membrane module (B) (21), provided with a membrane (22) with a limited retention, is provided at the pressure side with an outlet conduit (23) for concentrate, while at the permeate side an outlet conduit (24) runs towards the permeate side of a second membrane module (B) (25), provided with a membrane (26) with limited retention, provided at the pressure side with a connecting conduit (27) to the pressure side of the first membane module (B) (21) and at the permeate side provided with a connecting conduit (28) to the permeate side of a third (and in this case last) membrane module (B) (29), provided with a membrane (30) with limited retention, provided at the pressure side with a connecting conduit (31) to the pressure side of the second membrane module (B) (25) and at the permeate side provided with a connecting conduit for permeate (32), which via a pump (33) and conduit (34) leads towards the pressure side of a first membrane module (A) (35), provided with a membrane (36) with high retention, provided at the permeate side with an outlet conduit (37) for solvent, and at the pressure side provided with a connecting conduit (38) to the pressure side of a second membrane module (A) (39), provided with a membrane (40) with high retention, at the permeate side provided with a connecting conduit (41) to the permeate side of membrane module (A) (35) and at the pressure side provided with another connecting conduit (42) to the pressure side of a third (and in this case last) membrane module (A) (43), provided with a membrane (44) with high retention, provided at the pressure side with a connecting conduit (45) to the pressure side of the last membrane module (B) (29), and at the permeate side provided with a connecting conduit (46) to the permeate side of the second membrane module (A) (39). Into outlet conduit (32) also emerges a supply conduit (47) for fresh solution to be treated.

In a modification of the apparatus as shown in the drawing comprising a cascade of two membrane modules (B) in combination with one membrane module (A) a 2% saccharose solution in water was concentrated to 18% at various reflux ratios under otherwise identical conditions, i.e. membrane modules (B) each had a separation factor of α=2 and membrane module (A) had a separation factor of α>100; the permeability of the RO-membrane was 0.003 g/min.cm².bar; the permeability of the α-membrane was 0.15 g/min.cm².bar; the reflux ratio is the reflux flow from membrane module (B) to membrane module (A), divided by the product flow. The results obtained are presented in Table A (at 25 bar). Whereas one RO-membrane, i.e. only one membrane module (A) does not provide any 18% saccharose solution, a combination of one membrane module (B) and one membrane module (A) provides a production of 0.16—0.17 kg/min/m² at 15 bar and a maximum of 0.43 kg/min/m² at 25 bar, but a combination of a cascade of two membrane modules (B) with one membrane module (A) provides an increase in production to 0.17—0.21 kg/min/m² at 15 bar and to 0.47 kg/min/m² at 25 bar.

TABLE A

| Reflux ratio | Production kg concentrate/min/m² |
|---|---|
| 36 | 0.17 |
| 16 | 0.20 |
| 10 | 0.21 |
| 7.5 | 0.21 |
| 6 | 0.20 |
| 0 | 0.00 |

Though the invention is described for aqueous solutions, other solvents may be used, provided that suitable membranes are selected, in particular organic solvents such as for example benzene, xylene, toluene and pyridine. It will be obvious that the membrane material should be stable with respect to the solvent used.

In the manner described above it is thus possible to compensate for the limitations of RO-membranes by combining membrane modules (A) with high retention membranes (RO-membranes) with membrane modules (B) with limited retention membranes (α-membranes) said combination providing both higher concentrations and higher productivity than hitherto obtainable.

The invention is further elucidated in the following example.

Example

The example relates to concentrating a 2% aqueous glucose solution to a 20% aqueous glucose solution.

For this purpose were used a cascade of membrane modules (A) with a retention of 99% for glucose, linked in counter-current, and a cascade of membrane modules (B) with a retention of 0.5% for glucose, also linked in counter-current. Additional runs were made with a cascade of membrane modules (A) with one membrane module (B) and another series of runs was made with a combination of one membrane module (A) and a cascade of membrane modules (B). For comparison runs were made with only one membrane module (A) and another series of runs was made with a combination of one membrane module (A) and one membrane module (B). The results of these runs are presented in Table B hereinbelow.

TABLE B

| Number of modules | | Production kg concentrate/min/m² |
|---|---|---|
| (A) | (B) | |
| 1 | 0 | 2.2 |
| 1 | 1 | 2.7 |
| 1 | 2 | 3.1 |
| 2 | 1 | 3.3 |
| 2 | 2 | 3.8 |
| 3 | 3 | 4.6 |

**Claims**

1. A method for concentrating solutions by means of reverse osmosis, wherein at least one membrane module (A) with a high retention for the compound to be concentrated, is coupled with at least one membrane module (B) with a limited retention for the compound to be concentrated, the permeate from the (last) membrane module (B) (29) being returned to the (first) membrane module (A) (35), the solvent at the permeate side of the (first) membrane module (A) (35) being removed (37) and the concentrate of the compound to be concentrated being removed (23) at the pressure side of the (first) membrane module (B) (21), while the pressure sides of the (last) membrane module (A) (43) and the (last) membrane module (B) (29) are interconnected, and fresh solution to be treated is supplied at a point (47) in the connection (32) between the permeate side of the (last) membrane module (B) (29) and the pressure side of the (first) membrane module (A) (35) characterised in that

(a) the total number of membrane modules is at least three and up to sixteen, with no more than eight modules, linked in counter-current, per each retention class (A or B); and

(b) the retention of the limited retention membrane modules (B) corresponds to a separation factor in the range of $1<\alpha<4$.

2. Method according to claim 1, characterized in that the fresh solution to be treated is supplied at a point upstream from a pump (33).

3. A method according to any one of the preceding claims, characterised in that at least one the membrane modules (A) and (B) is a continuous membrane column.

4. A method according to claim 3, characterised in that at least a cascade of membrane modules (B) or a continuous membrane column as membrane module (B) is used, having a separation factor of the membranes used in the direction of the product flow diminishing from 4 to 1.1.

5. An apparatus for concentrating solutions by means of the reverse osmosis method according to claim 1 in which the permeate side of the (last) membrane module (B) (29) is connected to the pressure side of the (first) membrane module (A) (35) by a conduit (32, 34), and the pressure side of the (last) membrane module (A) (43) is connected to the pressure side of the (last) membrane module (B) (29) by a conduit (45), the (first) membrane module (A) (35) at the permeate side being provided with an outlet conduit (37) for solvent, the (first) membrane module (B) (21) at the pressure side being provided with an outlet conduit (23) for formed concentrate, a pump (33) being present in the connecting conduit (32, 34) between the (last) membrane module (B) (29) and the (first) membrane module (A) (35) and at a point between this (last) membrane module (B) (29) and the pump (33) a supply conduit (47) emerging into said connecting conduit (32), characterised in that

(a) the total number of membrane modules is at least three and up to sixteen, with no more than eight modules, linked in counter-current, per each retention class (A or B); and

(b) the retention of the limited retention membrane modules (B) corresponds to a separation factor in the range of $1<\alpha<4$.

6. An apparatus according to claim 5, characterised in that at least one of the membrane modules (A) and (B) is a continuous membrane column.

7. An apparatus according to claim 6, characterised in that at least a cascade of membrane modules (B) or a continuous membrane column as membrane module (B) has a separation factor of the membranes used in the direction of the product flow diminishing from 4 to 1.1.

**Patentansprüche**

1. Verfahren zum Konzentrieren von Lösungen mittels umgekehrter Osmose, bei dem wenigstens ein Membranmodul (A) mit einer großen Retention für die zu konzentrierende Verbindung mit wenigstens einem Membranmodul (B) mit einer begrenzten Retention für die zu konzentrierende Verbindung gekoppelt wird, das Permeat von dem (letzten) Membranmodul (B) (29) zu dem (ersten) Membranmodul (A) (35) zurückgeführt wird, das Lösungsmittel auf der Permeatseite des (ersten) Membranmoduls (A) (35) entfernt (37) und das Konzentrat der zu konzentrierenden Verbindung auf der Druckseite des (ersten) Membranmoduls (B) (21) entfernt (23) wird, während die Druckseiten des (letzten) Membranmoduls (A) (43) und des (letzten) Membranmoduls (B) (29) miteinander verbunden sind, und frische, zu behandelnde Lösung an einer Stelle (47) in der Verbindung (32) zwischen der Permeatseite des (letzten) Membranmoduls (B) (29) und der Druckseite des (ersten) Membranmoduls (A) (35) zugeführt wird, dadurch gekennzeichnet, daß

(a) die Gesamtzahl der Membranmodule wenigstens drei und bis zu sechzehn beträgt, wobei nicht mehr als acht Module für jede Retentionsklasse (A) oder (B) im Gegenstrom verbunden sind, und

(b) die Retention des Membranmoduls (B) mit begrenzter Retention einem Trennungsfaktor in der Größenordnung von 1<α<4 entspricht.

2. Verfahren nach Anspruch 1, dadurch gekennzeichnet, daß die zu behandelnde, frische Lösung an einer Stelle stromaufwärts einer Pumpe (33) zugeführt wird.

3. Verfahren nach einem der vorhergehenden Ansprüche, dadurch gekennzeichnet, daß wenigstens einer der Membranmodule (A) und (B) eine fortlaufende Membransäule ist.

4. Verfahren nach Anspruch 3, dadurch gekennzeichnet, daß wenigstens eine Kaskade von Membranmodulen (b) oder eine fortlaufende Membransäule als Membranmodule (B) verwendet wird, wobei der Trennungsfaktor der verwendeten Membranen in Richtung zu Produktströmung von 4 auf 1,1 abnimmt.

5. Vorrichtung zum Konzentrieren von Lösungen mittels des Verfahrens der umgekehrten Osmose nach Anspruch 1, wobei die Permeatseite des (letzten) Membranmoduls (B) (29) mit der Druckseite des (ersten) Membranmoduls (A) (35) durch eine Leitung (32, 34) und die Druckseite des (letzten) Membranmoduls (A) (43) mit der Druckseite des (letzten) Membranmoduls (B) (29) durch eine Leitung (45) verbunden ist, der (erste) Membranmodul (A) (35) auf der Permeatseite mit einer Auslaßleitung (37) für das Lösungsmittel versehen ist, der (erste) Membranmodul (B) (21) an der Druckseite mit einer Auslaßleitung (23) für das gebildete Konzentrat versehen ist, eine Pumpe (33) in der Verbindungsleitung (32, 34) zwischen dem (letzten) Membranmodul (B) (29) und dem (ersten) Membranmodul (A) (35) vorhanden ist und an einer Stelle zwischen diesem (letzten) Membranmodul (B) (29) und der Pumpe (33) eine Zuführleitung (47) in diese Verbindungsleitung (32) mündet, dadurch gekennzeichnet, daß

(a) die Gesamtzahl der Membranmodule mindestens drei und bis zu sechzehn ist, wobei nicht mehr als acht Module pro jeder Retentionsklasse (A) oder (B) im Gegenstrom verbunden sind, und

(b) die Retention des Membranmoduls (B) mit begrenzter Retention einem Trennungsfaktor im Bereich von 1<α<4 entspricht.

6. Vorrichtung nach Anspruch 5, dadurch gekennzeichnet, daß wenigstens eines der Membranmodule (A) und (B) eine fortlaufende Membransäule ist.

7. Vorrichtung nach Anspruch 6, dadurch gekennzeichnet, daß wenigstens zwei Kaskaden von Membranmodulen (B) oder zwei fortlaufende Membransäulen als Membranmodule (B) einen Trennungsfaktor bei den verwendeten Membranen aufweisen, der in Richtung der Produktströmung von 4 auf 1,1 abnimmt.

**Revendications**

1. Procédé pour concentrer des solutions au moyen d'une osmose inverse, où l'on couple au moins un module de membrane (A) avec une rétention élevée pour le composé à concentrer, avec au moins un module de membrane (B) avec une rétention limitée pour le composé à concentrer, le produit ayant traversé le (dernier) module de membrane B (29) étant renvoyé vers le (premier) module de membrane (A) (35), le solvant du côté du produit ayant traversé le (premier) module de membrane (A) (35) étant enlevé (37) et le concentré du composé à concentrer étant enlevé (23) du côté sous pression du (premier) module de membrane (B) (21), tandis que les côtés sous pression du (dernier) module de membrane (A) (43) et du dernier module de membrane (B) (29) sont interconnectés, et la solution fraîche à traiter est fournie en un point (47) dans le raccord (32) entre le côté du produit ayant traversé le (dernier) module de membrane (B) (29) et le côté sous pression du (premier) module de membrane (A) (35), caractérisé en ce que

(a) le nombre total de modules de membrane est d'au moins 3 et jusqu'à 16, avec au plus 8 modules, liés à contre-courant, pour chaque classe de rétention (A ou B); et

(b) la rétention des modules de membrane à rétention limitée (B) correspond à un facteur de séparation dans l'intervalle de 1<α<4.

2. Procédé selon la revendication 1, caractérisé en ce que la solution fraîche à traiter est fournie en un point situé en amont à partir d'une pompe (33).

3. Procédé selon l'une quelconque des revendications précédentes, caractérisé en ce qu'au moins un des modules de membrane (A) et (B) est une colonne de membrane continue.

4. Procédé selon la revendication 3, caractérisé en ce qu'on utilise au moins une cascade de modules de membrane (B) ou une colonne de membrane continue comme module de membrane (B), avec un facteur de séparation des membranes utilisées dans la direction de l'écoulement du produit diminuant de 4 à 1,1.

5. Appareil pour concentrer des solutions au moyen du procédé d'osmose inverse selon la revendication 1, où la côté du produit ayant traversé le (dernier) module de membrane (B) (29) est relié au côté sous pression du (premier) module de membrane (A) (35) par un conduit (32, 34) et le côté sous pression du (dernier) module de membrane (A) (43) est relié au côté sous pression du (dernier) module de membrane (B) (29) par un conduit (45), le (premier) module de membrane (A) (35) du côté du produit ayant traversé étant muni d'un conduit de sortie (37) pour le solvant, le (premier) module de membrane (B) (21) du côté sous pression étant muni d'un conduit de sortie (23) pour le concentré formé, une pompe (33) étant présente dans le conduit de liaison (32, 34) entre le (dernier) module de membrane (B) (29) et le (premier) module de membrane (A) (35) et à un point entre ce (dernier) module de membrane (B) (29) et la pompe (33) un conduit d'alimentation (47) émergeant dans ledit conduit de liaison (32), caractérisé en ce que

(a) le nombre total de modules de membrane est d'au moins 3 et jusqu'à 16, avec au plus 8 modules, liés à contre-courant, pour chaque classe de rétention (A ou B); et

(b) la rétention des modules de membrane à rétention limitée (b) correspond à un facteur de séparation dans l'intervalle de $1<\alpha<4$.

6. Appareil selon la revendication 5, caractérisé en ce qu'au moins un des modules de membrane (A) et (B) est une colonne de membrane continue.

7. Appareil selon la revendication 6, caractérisé en ce qu'au moins une cascade de modules de membrane (B) ou une colonne de membrane continue comme module de membrane (B) a un facteur de séparation des membranes utilisées dans la direction d'écoulement du produit diminuant de 4 à 1,1.